(19) Europäisches Patentamt / European Patent Office / Office européen des brevets

(11) **EP 2 207 046 B1**

(12) **EUROPEAN PATENT SPECIFICATION**

(45) Date of publication and mention
of the grant of the patent:
**15.08.2012 Bulletin 2012/33**

(51) Int Cl.:
***G01S 13/76*** *(2006.01)*

(21) Application number: **09150387.0**

(22) Date of filing: **12.01.2009**

(54) **Transponder and detection device using transmission time stamps**

Transponder und Zeitstempel verwendende Detektionsvorrichtung

Transpondeur et dispositif de détection utilisant des estampilles temporelles de transmission

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(43) Date of publication of application:
**14.07.2010 Bulletin 2010/28**

(73) Proprietor: **AMB i.t. Holding B.V.**
**2012 PJ Haarlem (NL)**

(72) Inventors:
 • **Six, Mark**
 **1967 HB, Heemskerk (NL)**
 • **Nagels, Boris**
 **2332 AE, Leiden (NL)**

(74) Representative: **van Looijengoed, Ferry Antoin Theodorus et al**
 **De Vries & Metman**
 **Overschiestraat 180**
 **1062 XK Amsterdam (NL)**

(56) References cited:
 **DE-A1- 10 202 802      US-A1- 2006 055 564**
 **US-A1- 2006 164 290      US-A1- 2008 250 498**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to the field of transponders and detection devices for signals of such transponders. In particular, the invention relates to complicating, preventing or reducing fraud in copying transponder signals of such transponders and re-use such signals for different transponders.

BACKGROUND OF THE INVENTION

Transponders have become commonplace devices in many different fields of applications. Transponders may, actively or triggered by an external signal, transmit a transponder signal containing information. This transponder signal, being provided as a data packet, can be received by a detection device for processing the data packet, e.g. decoding it to retrieve the information. Examples of such information include a unique identification code of the transponder, enabling identification of a transponder, and measurement data.

One particular field of application of such transponders and detection devices is position and/or time registration during sport events, such as car racing, athletics and skating, by means of the transponder signal. The vehicle, athlete or skater is provided with the transponder and if the transponder passes a detection device, the data packets are read multiple times at the detection device to accurately determine the time of passing of a transponder with a particular identification code.

It may occur, particularly in events wherein large amounts of transponders are used, that transponder signals (data packets) of different transponders are received at a detection device simultaneously. This interference prevents the detection device to appropriately process the transponder signal of each of the transponders. For that reason, each transponder typically transmits the data packets at varying time intervals to reduce the likelihood of repeated simultaneous transmission of the transponder signal for two transponders. As an example, the transponders may use a TDMA scheme wherein each transponder uses a time slot in a slot block for transmitting a data packet and uses a different time slot for transmitting the data packet in a subsequent slot block, wherein the slot blocks are separated in time by a slot block time interval. The definition of the timing parameters, such as the number of slots in a slot block, the slot duration and the time distance between slot blocks is dependent on the application.

Cases are known wherein a transponder signal of a transponder has been copied and subsequently been used in a different transponder. The transponder signal may be copied by receiving and recording the original transponder signal during a particular time, e.g. during 100 slot blocks yielding 100 data packets, and subsequently storing this transponder signal in and replaying this transponder signal from a different transponder. Indeed, the transponder signal of this forged transponder would have the same identification code as the transponder signal of the original transponder and may therefore corrupt appropriate detection of the original transponder.

US2008/250498 A1 (D1) discloses a method of detecting address spoofing in a wireless network, comprising the steps of obtaining frames comprising an address of a device having sent the frame and a timestamp representative of the time of sending of the frame by said device; of analyzing the timestamps included in the frames having one and the same sending device address; and of detecting a spoofing of said address according to the analysis of said timestamps.

DE10202802 A1 (D2) discloses an encoder in the transmitter and receiver devices that combines a time stamp signal with an identification number for identifying the transmitter and information data to form an encoded data signal and transmits encoded electronic data when the transmitter is activated.

US2006/055564 A1 (D3) discloses a data collection and evaluation system that includes an active RFID tag for collecting, time-stamping, and storing vehicle sensor data.

US2006164290 A1 (D4) discloses a beacon method for use in a wireless communication network that involves populating a beacon frame's channel identification data with accurate data associated with the use of a particular channel for wireless communication.

SUMMARY OF THE INVENTION

It is an object of the invention to provide a transponder and detection device wherein the burden for forgers to provide working transponders by recording and replaying transponder signals from an original transponder is increased.

A transponder comprising a transmitter, a controller and an inserter is disclosed. The transmitter is configured for transmitting a plurality of data packets, wherein each of the data packets comprises a first part containing an identifier of the transponder. The controller is arranged for controlling the transmitter such that the data packets are transmitted at different, (pseudo)-random transmission times. The inserter is configured for containing transmission time information in a second part of at least one of the plurality of transmitted data packets. The transmission time information relates to one or more of the transmission times of the data packets.

It should be noted that the inserter may be a part of the controller and/or the transmitter. Controlling and insertion task may be performed by software code running in the transponder.

A detection device comprising a receiver, a comparator and a processor is also disclosed. The receiver is configured for receiving a first data packet of a transponder at a first receiving time and a second data packet of the transponder at a second receiving time. At least one of the first and second data packets comprises transmission time information relating to the transmission time of at least one of the first and second data packet by the transponder. The comparator is configured for comparing the transmission time information and at least one of the first and second receiving times and for outputting a processing command only if the transmission time information is in conformance with the at least one of the first and second receiving times. The processor is configured for processing the first and second data packets in response to the processing command.

Methods of operating the transponder and the detection device are defined in claims 12 and 13, respectively. It should be noted that the method may be (partly) conducted by software code portions running in the transponder and the detection device, respectively.

A transponder system comprising the transponder and the detection device as defined above is also disclosed.

A transponder signal of a transponder is also disclosed, The transponder signal contains at least one data packet comprising a first part and a second part. The first part contain an identifier of the transponder. The second part contains transmission time information relating to a transmission time of transmitting at least one of the data packet and a subsequent data packet by the transponder.

By providing transmission time stamps in the data packets, it is no longer sufficient for a forger to simply record and replay an original transponder signal to obtain a working transponder. The forger should now make sure that the forged transponder not only replays the recorded data packets but also that it transmits these data packets at the correct points in time as indicated in the data packets themselves by the transmission time information. Otherwise, the detection device may decide to discard or refuse to process the data packet since it does not comply with the signalled transmission time information. Thus, the disclosed transponder signal complicates re-use of the transponder signal in a different transponder.

It should be noted that the transmission time information may take several forms as defined in claims 2 and 3.

The transmission time information in a data packet may e.g. relate directly to the transmission time of that data packet by the transponder. Alternatively or in addition, the transmission time information may relate to one or more transmission times of one or more subsequently transmitted data packets. These embodiments have the advantage of requiring only a small amount of processing in the transponder.

The transmission time information may also relate to a transmission time difference between a data packet and a further data packet to be transmitted, thereby omitting the need for synchronization between transponders and the detection device. Moreover, this embodiment enables a transmission time check at the detection device already for the first data packet.

The embodiments of claims 4, 5, 9 and 10 provide yet another embodiment of transmission time information, wherein reference is made to a time slot in e.g. a TDMA transmission scheme. Such embodiments are e.g. advantageous in events wherein many transponders are used.

The embodiments of claims 6 and 11 prevent easy access to the transmission time information.

The embodiment of claim 8 provides for an error margin resulting from delayed transponder signals. The embodiment is particularly suitable in a situation wherein the transmission time information relates to time slots in a slot block and a decision should be made whether the data packet is received at the signalled point in time.

It should be noted that the timing parameters of a transponder signal, such as the number of slots in a slot block, the slot duration and the time distance between slot blocks in a TDMA transmission scheme, is dependent on the application. An indication of the applicable timing parameters may also be signalled from the transponder to the detection device in a third part of the data packets. The detection device may use these timing parameters in order to decide whether or not a data packet complies with the signalled transmission time information for this data packet. The indication in the third part of the data packet may e.g. relate to a particular application for which the detection device may access the applicable timing parameters. This aspect has been described in co-pending Dutch patent application NL 2002273 of the applicant that is incorporated in the present application by reference.

Hereinafter, embodiments of the invention will be described in further detail. It should be appreciated, however, that these embodiments may not be construed as limiting the scope of protection for the present invention.

BRIEF DESCRIPTION OF THE DRAWINGS

In the drawings:

FIGS. 1A-1C provide a schematic illustration of a transponder system comprising a transponder and a detection system, a transponder according to an embodiment of the invention and a prior art data packet, respectively.

FIGS. 2A and 2B provide a schematic illustration of a data packet according to embodiments of the invention.

FIG. 3 provides a schematic illustration of TDMA transponder transmission according to an embodiment of the invention.

DETAILED DESCRIPTION OF THE DRAWINGS

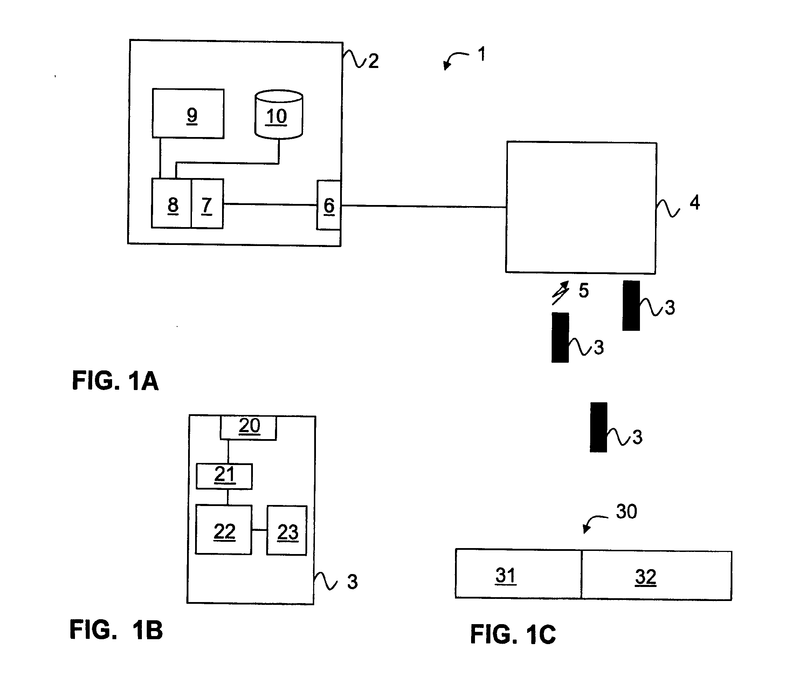

FIG. 1A provides a schematic illustration of a transponder system 1 comprising a detection device 2 and a plurality of transponders 3. Detection device 2 comprises or is a connected to an antenna 4 for picking up transponder signals 5 of transponders 3. Transponders 3 may be either active or passive transponders.

Detection device 2 comprises a receiver 6 connected to antenna 4, a decrypter 7, a comparator 8, a processor 9 and a database 10 containing timing parameters for a particular application. Database 10 may also be provided externally of detection device 2 and being accessible to the detection device 2 upon request.

Transponder 3, schematically illustrated in further detail in FIG. 1B, comprises a transmitter 20, an encrypter 21, a controller 22 and an inserter 23. If transponder 3 is an active transponder, it also comprises a battery (not shown).

In operation, a transponder 3 emits a transponder signal 5 during passing antenna 4. Transponder signal 5 comprises a plurality of data packets that each comprise an identification code enabling the transponder 3 to be recognized by the detection device 2 and are transmitted at pseudo-random points in time controlled by controller 22. Multiple data packets are received by detection device 2 and are used for determining a passing time or passing position in a manner known as such. FIG. 1C provides a prior art data packet 30 comprising an identification code field 31 and a payload field 32 containing further data.

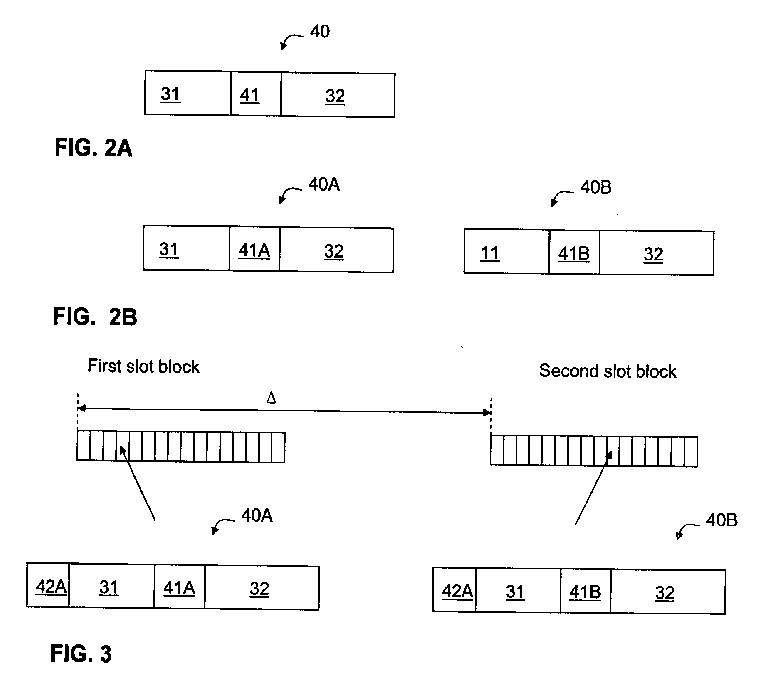

FIGS. 2A, 2B and 3 schematically illustrate data packets 40 according to embodiments of the invention that complicate use of recorded transponder signals 5 in a transponder system by an illegal transponder. Generally, this effect is obtained by containing transmission time information 41 in the data packet 40. This transmission time information is verified at the detection device 2 before the data packet is processed. The verification involves checking whether a data packet has indeed been transmitted by a transponder in accordance with a signalled transmission time within the data packet or a previous data packet. As a result, it is no longer sufficient for a forger to simply record and replay an original transponder signal 5 to obtain a working transponder. The forger should now make sure that the forged transponder not only replays the recorded data packets but also that it transmits these data packets at the correct points in time as indicated in the data packets themselves by the transmission time information. Otherwise, the detection device 2 may decide to not process or discard the data packet since it does not comply with the signalled transmission time information.

The data packet 40 of FIG. 2A is an embodiment wherein the data packet 40 comprises transmission time information 41 relating to the (absolute) time at which the data packet 40 was transmitted. If the detection device 2 and transponder 3 are time-synchronized, the detection device 2 may estimate on receipt of this data packet 40 whether this data packet 40 was transmitted at the time indicated in the field 41 via calculations by comparator 8 using a delay time indicative of the time required for the data packet to travel from the transponder 3 to the detection device 2 (possibly using an error margin). Only if the calculated time matches (within the error margin) the indicated transmission time in field 41, comparator 48 will issue a processing command signal for processor 9 to process data packet 40 (e.g. retrieve the transponder identifier from field 31). A similar check is performed for a next data packet 40 transmitted from transponder 3.

FIG. 2B provides an alternative embodiment wherein data packets 40A, 40B comprise transmission time information fields 41A, 41B. Transmission time information field 41A now indicates the point in time at which data packet 41B will be transmitted from transponder 3 or, alternatively, the time difference between the points in time when data packet 40A and data packet 40B are transmitted by transponder 3. Transmission time information field 41B indicates the point in time of or the time difference with a further data packet (not shown).

FIG. 3 is a schematic illustration wherein transponder signal 5 comprises a plurality of data packets 40A, 40B. The data packets 40A, 40B are transmitted subject to an assigned slot mechanism, wherein data block 40A is transmitted in a time slot #4 of a first slot block and data block 40B is transmitted in time slot #10 of a second slot block, controlled by controller 22. The start of first and second slot block is separated by a time interval $\Delta$ and both the first and second slot block comprise sixteen time slots. It should be noted that slot blocks may contain fewer or more time slots, such as four, eight or thirty-two time slots. Exemplary timing parameters are 125 $\mu$s for a time slot (i.e. a slot block is 2 ms), 80 $\mu$s for the duration of a data packet and 3 ms for time interval $\Delta$, dependent on the application.

Again, data blocks 40A, 40B comprise a first field 31 comprising an identifier of the transponder code and payload field 32. Identifier field 31 has e.g. twenty-four bits and payload field 32 has e.g. thirty bits. Transmission time information fields 41A, 41B in the present embodiment comprise four bits enabling identification of a time slot in the sixteen-time-slot slot blocks. In particular, transmission time information field 41A indicates the slot number difference between the slot number wherein data packet 40A is transmitted and the slot number wherein data packet 40B will be transmitted. Furthermore, data packets comprise an application field 42A, 42B indicating the application for which the transponder 3 is used.

Returning now to FIGS. 1A and 1B, the operation of the transponder 3 and the detection device 2 is now explained in the context of the embodiment of FIG. 3.

Controller 22 of transponder 3 selects the time slot of slot blocks used for transmitting data packets 40A and 40B. Accordingly, controller 22 has transmission time information of the difference in slot position (in the exemplary embodiment of FIG. 3 this difference amounts to six slots) between the data packets 40A and 40B. Inserter 23 enables this slot difference to be contained in field 41A of data packet 40A. Subsequently, field 41A (and possibly also other fields) is encrypted using encrypter 21 and the data packet 40A is transmitted via transmitter 20.

Data packet 40A is received at a receiving time T1 via antenna 4 and receiver 6 and decrypted using decrypter 7. Detection device 2 uses information in the application field 42A to retrieve timing parameters for the TDMA mechanism from database 10. Of course, this step is only an option. The timing parameters may also be pre-programmed in the detection device, e.g. for a single-application detection device 2.

Data packet 40B is received at a receiving time T2 in an identical manner.

Comparator 8 of detection device 2 may now perform the following calculation in order to determine whether the transmission time information is in correspondence with the receiving times T1 and T2 for data packets 40A and 40B, respectively:

$$\texttt{T1 + } \Delta \texttt{ + 6 slots = T2} \pm \texttt{error margin}$$

The values of $\Delta$ and the time duration of a slot are known at the detection device 2, e.g. from data base 10. Only if this equation is true, comparator 8 provides a processing command to processor 9 in order to process data packet 40A. The error margin is used to compensate for variable signal transmission delays.

It should be noted that many further alternatives exist for containing transmission time information in the data packets, which fall under the scope of the present invention. The gist of the invention is to discourage forgers of transponders from copying and replaying transponder signals by requiring that data packets are transmitted from a transponder at points in time that are contained in the data packets themselves.

## Claims

1. A transponder (3) comprising:

   - a transmitter (20) configured for transmitting a plurality of data packets, each of said data packets comprising a first part comprising an identifier of said transponder (3);
   - a controller (22) arranged for controlling said transmitter such that said plurality of data packets are transmitted at different transmission times;
   - an inserter (23) configured for containing transmission time information in a second part of at least one of said plurality of transmitted data packets, said transmission time information relating to one or more of said different transmission times of said data packets;

   **characterized in that**
   said controller (22) is further configured for:

   selecting a first time slot of a first slot block of said data packets and a second time slot for a second slot block of said data packets;
   controlling said transmitter to transmit at least a first data packet of said data packets in the first time slot of the first slot block and a second data packet of said data packets in the second time slot of the second slot block;

   and wherein said inserter (23) is further configured for inserting said transmission time information as being indicative of at least one of said first time slot and said second time slot in which said first and second data packet is transmitted;

   - wherein said transmission time information of said first data packet is indicative of a slot number difference between said first time slot and said second time slot.

2. The transponder (3) according to claim 1, wherein said transmission time information in a data packet is indicative of a difference of the transmission time at which said data packet is transmitted and the transmission time at which a subsequent data packet is transmitted.

3. The transponder (3) according to one or more of the preceding claims, further comprising an encrypter (21) configured for encrypting said transmission time information.

4. A detection device (2) comprising

- a receiver (6) configured for receiving a first data packet of a transponder at a first receiving time and a second data packet of said transponder (3) at a second receiving time, said first data packet comprising transmission time information relating to the transmission time by said transponder (3);
- a comparator (8) configured for comparing said transmission time information and at least one of said first and second receiving times and for outputting a processing command only if said transmission time information is in conformance with said first and second receiving times;
- a processor (9) configured for processing said first and second data packets in response to said processing command;
**characterized in that**
- said receiver (6) is further configured for receiving said first data packet in a first transmission time slot of a first transmission slot block of data packets and said second data packet in a second transmission time slot of a second transmission slot block of data packets;
- wherein said first data packet comprises transmission time information indicative of at least one of said first and second transmission slot; and
- wherein said transmission time information is indicative of a slot number difference between said second transmission slot and said first transmission slot.

5. The detection device (2) according to claim 4, wherein said comparator (8) is configured for using an error margin for de termining whether said transmission time information is in conformance with said first and second receiving times during said comparison step.

6. The detection device (2) according to one or more of the claims 4-5, wherein said detection device (2) comprises a decrypter (7) for decrypting said transmission time information.

7. A method of transmitting a plurality of data packets from a transponder (3) to a detection device (2), the method comprising the steps of:

- controlling transmission of said data packets such that said plurality of data packets are transmitted at different transmission times;
- containing transmission time information in at least one of said plurality of data packets, said transmission time information relating to one or more of said different transmission times of said data packets
**characterized in that** said controlling transmission of said data packets comprises:

selecting a first time slot of a first slot block of said plurality of data packets and a second time slot for a second slot block of said plurality of data packets;
controlling said transmitter to transmit at least a first data packet in the first time slot of the first slot block and a second data packet in the second time slot of the second slot block;

- wherein said transmission time information is being indicative of at least one of said first and second slot in which said first and second data packet is transmitted; and
- wherein said transmission time information of said first data packet is indicative of a slot number difference between said second time slot and said first time slot.

8. A method of detecting a plurality of data packets from a transponder (3) in a detection device (2), the method comprising the steps of:

- receiving a first data packet of the transponder at a first receiving time and a second data packet of said transponder (3) at a second receiving time, at least one of said first and second data packet comprising transmission time information relating to the transmission time by said transponder (3) of at least one of said first and second data packet;

- comparing said transmission time information and at least one of said first and second receiving times;
- outputting a processing command only if said transmission time information is in conformance with said first and second receiving times;
- processing said first and second data packets in response to said processing command;

**characterized in that** receiving said first data packet comprises receiving said first data packet in a first transmission time slot of a first transmission slot block of data packets and receiving said second data packet comprises receiving said second data packet in a second transmission time slot of a second transmission slot block of data packets;

- wherein said first data packet comprises transmission time information indicative of at least one of said first and second transmission slot; and
- wherein said transmission time information is indicative of a slot number difference between said second transmission slot and said first transmission slot.

## Patentansprüche

1. Ein Transponder (3), aufweisend:

   - einen Sender (20), der zum Senden einer Mehrzahl von Datenpaketen eingerichtet ist, wobei jedes der Datenpakete einen ersten Teil aufweist, der einen Identifikator des Transponders (3) aufweist,
   - eine Steuereinrichtung (22), die zum Steuern des Senders eingerichtet ist, so dass die Mehrzahl von Datenpaketen zu unterschiedlichen Sendezeiten gesendet wird,
   - eine Einfügeeinrichtung (23), die zum Enthalten von Sendezeitinformationen in einem zweiten Teil von mindestens einem der Mehrzahl von gesendeten Datenpaketen eingerichtet ist, wobei die Sendezeitinformationen eine oder mehr der unterschiedlichen Sendezeiten der Datenpakete betreffen,
   **dadurch gekennzeichnet, dass**
   die Steuereinrichtung (22) ferner eingerichtet ist zum:

      Auswählen eines ersten Zeitschlitzes eines ersten Schlitzblocks der Datenpakete und eines zweiten Zeitschlitzes für einen zweiten Schlitzblock der Datenpakete,
      Steuern des Senders zum Senden mindestens eines ersten Datenpaketes der Datenpakete in dem ersten Zeitschlitz des ersten Schlitzblocks und eines zweiten Datenpaketes der Datenpakete in dem zweiten Zeitschlitz des zweiten Schlitzblocks,
      und wobei die Einfügeeinrichtung (23) ferner zum Einfügen der Sendezeitinformationen zum Hinweisen auf mindestens eines von dem ersten Zeitschlitz und dem zweiten Zeitschlitz eingerichtet ist, in dem das erste und das zweite Datenpaket gesendet werden,

   - wobei die Sendezeitinformationen des ersten Datenpaketes auf eine Schlitzzahldifferenz zwischen dem ersten Zeitschlitz und dem zweiten Zeitschlitz hinweisen.

2. Der Transponder (3) gemäß Anspruch 1, wobei die Sendezeitinformationen in einem Datenpaket auf eine Differenz zwischen der Sendezeit, in der das Datenpaket gesendet wird, und der Sendezeit, in der ein nachfolgendes Datenpaket gesendet wird, hinweisen.

3. Der Transponder (3) gemäß einem oder mehr der vorhergehenden Ansprüche, ferner eine Verschlüsselungseinrichtung (21) aufweisend, die zum Verschlüsseln der Sendezeitinformationen eingerichtet ist.

4. Eine Detektionsvorrichtung (2), aufweisend:

   - einen Empfänger (6), der zum Empfangen eines ersten Datenpaketes eines Transponders in einer ersten Empfangszeit und eines zweiten Datenpakets des Transponders (3) in einer zweiten Empfangszeit eingerichtet ist, wobei das erste Datenpaket Sendezeitinformationen aufweist, die die Sendezeit durch den Transponder (3) betreffen,
   - eine Vergleichseinrichtung (8), die zum Vergleichen der Sendezeitinformationen und mindestens einer von der ersten und der zweiten Empfangszeit und zum Ausgeben eines Verarbeitungsbefehls nur dann, wenn die Sendezeitinformationen mit der ersten und der zweiten Sendezeit übereinstimmen, eingerichtet ist,
   - einen Prozessor (9), der zum Verarbeiten des ersten und des zweiten Datenpakets in Antwort auf den Verarbeitungsbefehl eingerichtet ist,
**dadurch gekennzeichnet, dass**
- der Empfänger (6) ferner eingerichtet ist zum Empfangen des ersten Datenpakets in einem ersten Sendezeitschlitz eines ersten Sendeschlitzblocks von Datenpaketen und des zweiten Datenpakets in einem zweiten Sendezeitschlitz eines zweiten Sendeschlitzblocks von Datenpaketen,
- wobei das erste Datenpaket Sendezeitinformationen aufweist, die auf mindestens einen von dem ersten und dem zweiten Sendeschlitz hinweisen, und
- wobei die Sendezeitinformationen auf eine Schlitzzahldifferenz zwischen dem zweiten Sendeschlitz und dem ersten Sendeschlitz hinweisen.

5. Die Detektionsvorrichtung (2) gemäß Anspruch 4, wobei die Vergleichseinrichtung (8) zum Nutzen einer Fehlerspanne eingerichtet ist, zum Ermitteln, ob die Sendezeitinformationen während des Vergleichsschrittes mit der ersten und der zweiten Empfangszeit übereinstimmen.

6. Die Detektionsvorrichtung (2) gemäß einem oder mehr der Ansprüche 4 bis 5, wobei die Detektionsvorrichtung (2) eine Entschlüsselungsvorrichtung (7) zum Entschlüsseln der Sendezeitinformationen aufweist.

7. Ein Verfahren zum Senden einer Mehrzahl von Datenpaketen von einem Transponder (3) an eine Detektionsvorrichtung (2), wobei das Verfahren die folgenden Schritte aufweist:

    - Steuern des Sendens der Datenpakete, so dass die Mehrzahl von Datenpaketen in unterschiedlichen Sendezeiten gesendet wird,
    - Aufnehmen von Sendezeitinformationen in mindestens einem der Mehrzahl von Datenpaketen, wobei die Sendezeitinformationen eine oder mehr der unterschiedlichen Sendezeiten der Datenpakete betreffen,
    **dadurch gekennzeichnet, dass** das Steuern des Sendens der Datenpakete aufweist:

        Auswählen eines ersten Zeitschlitzes eines ersten Schlitzblocks der Mehrzahl von Datenpaketen und eines zweiten Zeitschlitzes für einen zweiten Schlitzblock der Mehrzahl von Datenpaketen,
        Steuern des Senders zum Senden mindestens eines ersten Datenpakets in dem ersten Zeitschlitz des ersten Schlitzblocks und eines zweiten Datenpakets in dem zweiten Zeitschlitz des zweiten Schlitzblocks,

    - wobei die Sendezeitinformationen auf mindestens einen von dem ersten und dem zweiten Schlitz hinweisen, in denen das erste und das zweite Datenpaket übertragen werden, und
    - wobei die Sendezeitinformationen des ersten Datenpakets auf eine Schlitzzahldifferenz zwischen dem zweiten Zeitschlitz und dem ersten Zeitschlitz hinweisen.

8. Ein Verfahren zum Detektieren einer Mehrzahl von Datenpaketen von einem Transponder (3) in einer Detektionsvorrichtung (2), wobei das Verfahren die folgenden Schritte aufweist:

    - Empfangen eines ersten Datenpakets des Transponders in einer ersten Empfangszeit und eines zweiten Datenpakets des Transponders (3) in einer zweiten Empfangszeit, wobei mindestens eines von dem ersten und dem zweiten Datenpaket Sendezeitinformationen aufweist, die die Sendezeit durch den Transponder (3) des mindestens einen von dem ersten und dem zweiten Datenpaket betreffen,
    - Vergleichen der Sendezeitinformationen und mindestens einer von der ersten und der zweiten Empfangszeit,
    - Ausgeben eines Verarbeitungsbefehls nur dann, wenn die Sendezeitinformationen mit der ersten und der zweiten Empfangszeit übereinstimmen,
    - Verarbeiten des ersten und des zweiten Datenpakets in Antwort auf den Verarbeitungsbefehl,
    **dadurch gekennzeichnet, dass** das Empfangen des ersten Datenpakets das Empfangen des ersten Datenpakets in einem ersten Sendezeitschlitz eines ersten Sendeschlitzblocks von Datenpaketen aufweist, und das Empfangen des zweiten Datenpakets das Empfangen des zweiten Datenpakets in einem zweiten Sendezeitschlitz eines zweiten Sendeschlitzblocks von Datenpaketen aufweist,
    - wobei das erste Datenpaket Sendezeitinformationen aufweist, die auf mindestens einen von dem ersten und dem zweiten Sendeschlitz hinweisen, und
    - wobei die Sendezeitinformationen auf eine Schlitzzahldifferenz zwischen dem zweiten Sendeschlitz und dem ersten Sendeschlitz hinweisen.

**Revendications**

1. Transpondeur (3) comprenant :

   - un émetteur (20) configuré pour transmettre une pluralité de paquets de données, chacun desdits paquets de données comprenant une première partie comprenant un identifiant dudit transpondeur (3) ;
   - un contrôleur (22) agencé pour commander ledit émetteur de sorte que ladite pluralité de paquets de données soit transmise à différents temps de transmission ;
   - un dispositif d'insertion (23) configuré pour contenir des informations de temps de transmission dans une deuxième partie d'au moins l'un de ladite pluralité de paquets de données transmis, lesdites informations de temps de transmission étant relatives à un ou plusieurs desdits temps de transmission différents desdits paquets de données; **caractérisé en ce que**
   ledit contrôleur (22) est en outre configuré pour effectuer:

     la sélection d'un premier intervalle de temps d'un premier bloc d'intervalle desdits paquets de données et d'un deuxième intervalle de temps d'un deuxième bloc d'intervalle desdits paquets de données ;
     la commande au dit émetteur de transmettre au moins un premier paquet de données desdits paquets de données dans le premier intervalle de temps du premier bloc d'intervalle et un deuxième paquet de données desdits paquets de données dans le deuxième intervalle du deuxième bloc d'intervalle ;
     et dans lequel ledit dispositif d'insertion (23) est en outre configuré pour insérer lesdites informations de temps de transmission comme étant indicatives d'au moins l'un dudit premier intervalle de temps et dudit deuxième intervalle de temps dans lesquels lesdits premier et deuxième paquets de données sont transmis ;

   - dans lequel lesdites informations de temps de transmission dudit premier paquet de données sont indicatives d'une différence de numéro d'intervalle entre ledit premier intervalle de temps et ledit deuxième intervalle de temps.

2. Transpondeur (3) selon la revendication 1, dans lequel lesdites informations de temps de transmission dans un paquet de données sont indicatives d'une différence du temps de transmission auquel ledit paquet de données est transmis et du temps de transmission auquel un paquet de données suivant est transmis.

3. Transpondeur (3) selon une ou plusieurs des revendications précédentes, comprenant en outre un dispositif de cryptage (21) configuré pour crypter lesdites informations de temps de transmission.

4. Dispositif de détection (2) comprenant:

   - un récepteur (6) configuré pour recevoir un premier paquet de données d'un transpondeur à un premier temps de réception et un deuxième paquet de données dudit transpondeur (3) à un deuxième temps de réception, ledit premier paquet de données comprenant des informations de temps de transmission relatives au temps de transmission par ledit transpondeur (3) ;
   - un comparateur (8) configuré pour comparer lesdites informations de temps de transmission et au moins l'un desdits premier et deuxième temps de réception et pour délivrer une commande de traitement uniquement si lesdites informations de temps de transmission sont conformes aux dits premier et deuxième temps de réception ;
   - un processeur (9) configuré pour traiter lesdits premier et deuxième paquets de données en réponse à ladite commande de traitement;
   **caractérisé en ce que**
   - ledit récepteur (6) est en outre configuré pour recevoir ledit premier paquet de données dans un premier intervalle de temps de transmission d'un premier bloc d'intervalle de transmission de paquets de données et ledit deuxième paquet de données dans un deuxième intervalle de temps de transmission d'un deuxième bloc d'intervalle de transmission de paquets de données ;
   - dans lequel ledit premier paquet de données comprend des informations de temps de transmission indicatives d'au moins l'un desdits premier et deuxième intervalles de transmission ; et
   - dans lequel lesdites informations de temps de transmission sont indicatives d'une différence de numéros d'intervalle entre ledit deuxième intervalle de transmission et ledit premier intervalle de transmission.

5. Dispositif de détection (2) selon la revendication 4, dans lequel ledit comparateur (8) est configuré pour utiliser une marge d'erreur pour déterminer si lesdites informations de temps de transmission sont conformes aux dits premier et deuxième temps de réception au cours de ladite étape de comparaison.

**6.** Dispositif de détection (2) selon une ou plusieurs des revendications 4 et 5, dans lequel ledit dispositif de détection (2) comprend un décrypteur (7) pour décrypter lesdites informations de temps de transmission.

**7.** Procédé de transmission d'une pluralité de paquets de données d'un transpondeur (3) à un dispositif de détection (2), le procédé comprenant les étapes de :

- commande d'une transmission desdits paquets de données de sorte que ladite pluralité de paquets de données soit transmise à différents temps de transmission ;
- contenance d'informations de temps de transmission dans au moins l'un de ladite pluralité de paquets de données, lesdites informations de temps de transmission étant relatives à un ou plusieurs desdits temps de transmission différents desdits paquets de données ;
**caractérisé en ce que** ladite commande de transmission desdits paquets de données comprend :

la sélection d'un premier intervalle de temps d'un premier bloc d'intervalle de ladite pluralité de paquets de données et d'un deuxième intervalle de temps d'un deuxième bloc d'intervalle de ladite pluralité de paquets de données ;
la commande au dit émetteur de transmettre au moins un premier paquet de données dans le premier intervalle de temps du premier bloc d'intervalle de temps et un deuxième paquet de données dans le deuxième intervalle de temps du deuxième bloc d'intervalle ;

- dans lequel lesdites informations de temps de transmission sont indicatives d'au moins l'un desdits premier et deuxième intervalles dans lesquels lesdits premier et deuxième paquets de données sont transmis ; et
- dans lequel lesdites informations de temps de transmission dudit premier paquet de données sont indicatives d'une différence de numéros d'intervalle entre ledit premier intervalle de temps et ledit deuxième intervalle de temps.

**8.** Procédé de détection d'une pluralité de paquets de données d'un transpondeur (3) dans un dispositif de détection (2), le procédé comprenant les étapes de :

- réception d'un premier paquet de données du transpondeur à un premier temps de réception et d'un deuxième paquet de données dudit transpondeur (3) à un deuxième temps de réception, au moins l'un desdits premier et deuxième paquets de données comprenant des informations de temps de transmission relatives au temps de transmission par ledit transpondeur (3) d'au moins l'un desdits premier et deuxième paquets de données ;
- comparaison desdites informations de temps de transmission et d'au moins l'un desdits premier et deuxième temps de réception ;
- délivrance d'une commande de traitement uniquement si lesdites informations de temps de transmission sont conformes aux dits premier et deuxième temps de réception ;
- traitement desdits premier et deuxième paquets de données en réponse à ladite commande de traitement ;
**caractérisé en ce que** la réception dudit premier paquet de données comprend la réception dudit premier paquet de données dans un premier intervalle de temps de transmission d'un premier bloc d'intervalle de transmission de paquets de données et la réception dudit deuxième paquet de données comprend la réception dudit deuxième paquet de données dans un deuxième intervalle de temps de transmission d'un deuxième bloc d'intervalle de transmission de paquets de données ;
- dans lequel ledit premier paquet de données comprend des informations de temps de transmission indicatives d'au moins l'un desdits premier et deuxième intervalles de transmission ; et
- dans lequel lesdites informations de temps de transmission sont indicatives d'une différence de numéro d'intervalle entre ledit deuxième intervalle de transmission et ledit premier intervalle de transmission.

FIG. 1A

FIG. 1B

FIG. 1C

FIG. 2A

FIG. 2B

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008250498 A1
- DE 10202802 A1
- US 2006055564 A1
- US 2006164290 A1
- NL 2002273